Europäisches Patentamt

European Patent Office

Office européen des brevets

(19)

(11) Veröffentlichungsnummer: **0 061 643**
**B1**

(12) # EUROPÄISCHE PATENTSCHRIFT

(45) Veröffentlichungstag der Patentschrift:
**22.06.88**

(21) Anmeldenummer: **82102105.2**

(22) Anmeldetag: **16.03.82**

(51) Int. Cl.⁴: **B 25 H 1/06,** B 62 D 65/00,
B 25 H 1/00, B 25 H 1/18

(54) **Fahrbarer Montagebock.**

(30) Priorität: 25.03.81 DE 3111694

(43) Veröffentlichungstag der Anmeldung:
**06.10.82 Patentblatt 82/40**

(45) Bekanntmachung des Hinweises auf die Patenterteilung:
**22.06.88 Patentblatt 88/25**

(84) Benannte Vertragsstaaten:
**CH DE FR GB LI**

(56) Entgegenhaltungen:
**EP - A - 0 100 729
BE - A - 487 913
DE - A - 3 145 820**

(73) Patentinhaber: DEERE & COMPANY, 1 John Deere Road,
Moline Illinois 61265 (US)
Patentinhaber: HAYEK Engineering AG,
Dreikönigstrasse 21, CH-8002 Zürich (CH)

(72) Erfinder: Ehlers, Johann Hinrich, Wehlingweg 24,
D-6940 Weinheim 4 (DE)
Erfinder: Stäger, Paul, Grüningerstrasse 9,
CH-8620 Wetzikon (CH)

(74) Vertreter: Collins, Geoffrey Stainton et al, c/o Reddie &
Grose 16 Theobalds Road, London WC1X 8PL (GB)

**Beschreibung**

Die Erfindung betrifft einen fahrbaren Montagebock für grössere Baueinheiten, z. B. Fahrzeugkabinen, mit einem zwei gegenüberliegende Stützen tragenden Fahrgestell in Flach- oder Rahmenbauweise, wobei die Stützen eine drehbar gelagerte Montageschwinge tragen, deren unteres Auflageteil sich unterhalb des Schwingdrehpunktes befindet und auf die ein selbsthemmendes Schneckengetriebe oder dgl. wirkt oder ein entsprechender Antrieb mit Stellmotor.

Ein Montagebock mit den genannten Merkmalen ist aus der US-PS-1 812 585 bekanntgeworden. Fahrgestell und Schwinge ermöglichen dort allerdings keine Lagerung in Bodennähe, so dass insbesondere bei höherdimensionierten Baueinheiten der Schwerpunkt gefährlich hoch liegen kann und Montagearbeiten im oberen Bereich der Baueinheiten erschwert sind.

Dieselben Nachteile weist ein Montagebock gemäss der DE-PS-680 012 auf, dessen Schwinge aus zwei sich in der Ebene der Drehachse gegenüberliegenden Winkeleisen besteht. Die Schwinge kann durch Handradantrieb gedreht bzw. gekippt werden und ist ebenfalls symmetrisch zum Drehpunkt ausgebildet.

Der Erfindung liegt die Aufgabe zugrunde, einen Montagebock zu schaffen, der die vorgenannten Nachteile nicht aufweist und der insbesondere für grössere Baueinheiten wie z.B. Traktorkabinen besonders geeignet ist. Bei grösseren Baueinheiten mit einer Gesamthöhe von 1,80 bis 2 m wird angestrebt, die Montagepunkte so tief wie möglich zu legen, damit bei Senkrechtstellung der Baueinheit noch alle zu montierenden Bereiche vom Hallenboden aus im Stehen zugänglich sind. Gleichzeitig soll der Montagebock so ausgebildet sein, dass dieser in Kippstellung, insbesondere in 90°-Kippstellung, die Baueinheit wiederum in einer optimalen Montagehöhe präsentieren kann. Dies bedeutet bei typischen Fahrzeugkabinen, deren Höhe die Länge bzw. Tiefe übersteigt (z.B. Kabinenhöhe ca. 1,90 m, Kabinenlänge ca. 1,20 m), dass die Kabine nun insgesamt nicht zu nah am Boden liegen soll, um ein zu unbequemes Montieren zu vermeiden.

Zugleich sollte ein Montagebock, der diese Anforderungen erfüllt, ausreichend stabil und günstig herstellbar sein.

Bei einem fahrbaren Montagebock der eingangs genannten Art wird diese Aufgabe nun dadurch gelöst, dass das Fahrgestell so gestaltet ist, dass das untere Auflageteil der Schwinge mit seinen Montagepunkten in grösstmöglicher Bodennähe dreh- und feststellbar ist, und dass die Lage des Schwingendrehpunktes gegenüber der Mittellinie der seitlichen Enden des unteren Auflageteiles um einen Betrag von z.B. 150 mm verlegt ist zur Erzielung einer entsprechend höheren Positionierung der Baueinheit in der Kippstellung.

Eine bevorzugte Ausführungsform des Montagebockes besteht darin, dass die Schwinge im wesentlichen aus zwei sich gegenüberliegenden, etwa dreieckig geformten Seitenflächen besteht, deren Spitze jeweils ein Drehteil aufweist und deren Basis als unteres Auflageteil jeweils mindestens einen Montageklemmpunkt und einen weiteren Auflagepunkt für die zu montierende Baueinheit aufnimmt.

Weitere vorteilhafte Ausführungsformen der Erfindung sind in weiteren Unteransprüchen gekennzeichnet.

Im folgenden wird die Erfindung anhand eines Ausführungsbeispieles näher erläutert, aus dem sich weitere Merkmale und Vorteile der Erfindung ergeben.

In der zugehörigen Zeichnung zeigt
Fig. 1 den Montagebock ohne Schwinge,
Fig. 2 die Montageschwinge,
Fig. 3 eine Seitenfläche der Schwinge in gegenüber Fig. 2 vergrössertem Massstab,
Fig. 4 den Montagebock mit Fahrzeugkabine in drei verschiedenen Positionen (a, b, c).

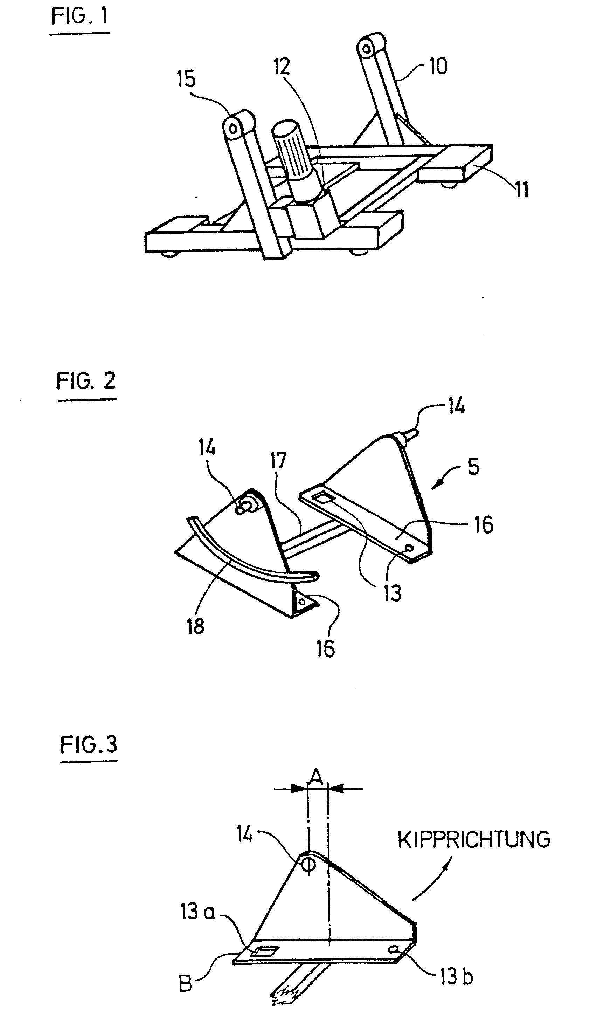

Fig. 1 zeigt einen auf einem Fahrgestell 11 vorgesehenen Montagebock, der im wesentlichen viereckig in Flachrahmenbauweise hergestellt ist und Stützen 10 aufweist, die etwas geneigt angeordnet entsprechend der asymmetrischen Form der Montageschwinge sind. Seine Räder sind bevorzugt eingelassen im Sinne einer möglichst niederen Bauweise, um kein Hindernis beim Kippen der tiefliegenden Montagepunkte zu bilden.

Der Rahmen kann vorteilhafterweise als Schweisskonstruktion aus Stahl-Rechteckrohr, z.B. mit einer Abmessung 50 × 100 mm (Wandstärke 5 mm), gefertigt sein. Bevorzugt erhält er einen nach unten weisenden Mitnehmerbolzen, um in eine Unterflur-Schleppkette für fliessbandähnliche Fertigungsgegebenheiten eingehängt werden zu können. Von den vier Rädern sind bevorzugt alle, zumindest aber zwei, lenkbar.

Eine zwischen die Stützen 10 einzusetzende Montageschwinge 5 ist in Fig. 2 gesondert gezeichnet. Sie ist als Schweisskonstruktion hergestellt wie der eigentliche Montagebock und besteht im wesentlichen aus zwei dreieckigen Seitenblechen (Stahlbleche mit einer Wandstärke von ca. 5–6 mm), die mit mindestens einer Traverse 17 verschweisst sind.

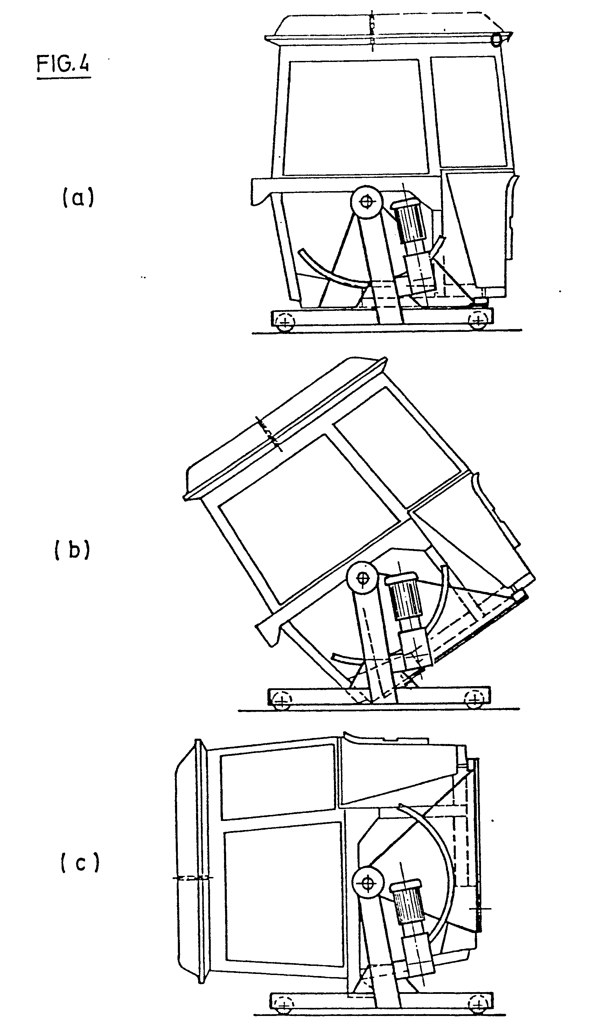

Die Seitenbleche weisen rechtwinklige Abkantungen 16 nach innen auf, welche Montagepunkte 13 aufnehmen. Sie können – je nach den Auflagemöglichkeiten der zu montierenden Baueinheit – asymmetrisch gestaltet und angeschweisst sein, wie es in Fig. 3 gezeigt ist. An der Spitze der dreieckförmigen Bleche sind jeweils Drehteile bzw. Lagerzapfen 14 (Durchmesser z.B. 60 mm) angebracht, die in an den oberen Enden der Stützen 10 vorgesehene Lagerbuchsen 15 eingreifen, so dass die Schwinge kippbar ist. Die Drehung erfolgt bevorzugt über eine an der Seitenfläche der Schwinge 5 angebrachte kurvenförmige Zahnstange 18, auf die das Zahnrad eines Schneckengetriebes 12 vorzugsweise direkt einwirkt. Das an sich bekannte selbsthemmende Schneckengetriebe 12 wird von einem Elektromotor, aus Sicherheitsgründen am besten einem Bremsmotor, angetrieben. Die genannten Komponenten sind bekannt, ihre genauere Darstellung erübrigt sich daher. Auch eine entsprechend grosse Übersetzung mit Zahnkettentransmission kommt in Frage (wie es in Fig. 4 angedeutet ist).

Wie aus Fig. 3 ersichtlich ist die bevorzugt aus Vollblech hergestellte Seitenfläche so ausgebildet, dass ihre Lagerzapfen 14 und somit ihr Drehpunkt zu der Mittellinie der Montagepunkte 13 bzw. der hierauf zu montierenden Baueinheit seitlich um den Betrag «A» versetzt sind. Dieser Betrag kann z.B. bei 100 bis 200 mm liegen. Bei den typischen Abmessungen von Fahrzeugkabinen mit einer Höhe von 1,80 bis 2,00 m empfiehlt sich ein Betrag von 140 bis 160 mm. Um den Schwerpunkt der Gesamtanordnung und der zu montierenden Baueinheit möglichst tief legen zu können, erfolgt die Drehung bzw. Kipprichtung so, dass die kürzere Ecke «B» den bodennächsten Punkt durchläuft und in ihrem Schwenkbereich keine störenden Rahmenteile des Montagebockes liegen. Das untere Auflageteil bzw. die Abkantung 16 der Schwinge 5 enthält auf jeder Seite mindestens zwei Montagepunkte, von denen mindestens einer ein Montageklemmpunkt 13a ist, so dass die zu montierende Baueinheit beim Kippen nicht verrutscht. Der andere Montagepunkt kann ein Auflagepunkt 13b sein. Der Klemmpunkt kann z.B. als Lasche mit Schnellverschraubung ausgebildet sein. Er muss an die speziellen Erfordernisse der zu montierenden Baueinheit angepasst sein.

Fig. 4 zeigt den Montagebock in drei verschiedenen Positionen (a, b, c) und vermittelt einen Eindruck von den günstigen Positionierungs- bzw. Montageverhältnissen.

**Patentansprüche**

1. Fahrbarer Montagebock für grössere Baueinheiten, z.B. Fahrzeugkabinen, mit einem zwei gegenüberliegende Stützen (10) tragenden Fahrgestell (11) in Flach- oder Rahmenbauweise, wobei die Stützen (10) eine drehbar gelagerte Montageschwinge (5) tragen, deren unteres Auflageteil (16) sich unterhalb des Schwingendrehpunktes (14, 15) befindet und auf die ein selbsthemmendes Schneckengetriebe (12) oder dgl. wirkt, dadurch gekennzeichnet, dass das Fahrgestell (11) so gestaltet ist, dass das untere Auflageteil (16) der Schwinge (5) mit seinen Montagepunkten (13) in grösstmöglicher Bodennähe dreh- und feststellbar ist, und dass die Lage des Schwingendrehpunktes (14, 15) gegenüber der Mittellinie der seitlichen Enden des unteren Auflageteiles (16) bzw. der hierauf zu montierenden Baueinheit um einen Betrag (A), z.B. 150 mm, verlegt ist zur Erzielung einer entsprechend höheren Positionierung der Baueinheit in der Kippstellung.

2. Fahrbarer Montagebock nach Anspruch 1, dadurch gekennzeichnet, dass die Schwinge (5) im wesentlichen aus zwei sich gegenüberliegenden, etwa dreieckig geformten Seitenflächen besteht, deren Spitze jeweils ein Drehteil (14) aufweist und deren Basis als unteres Auflageteil (16) jeweils mindestens einen Montageklemmpunkt (13a) und einen weiteren Auflagepunkt (13b) für die zu montierende Baueinheit aufnimmt.

3. Fahrbarer Montagebock nach Anspruch 2, dadurch gekennzeichnet, dass die Schwinge (5) zwei dreieckige Bleche aufweist, an deren Spitze jeweils ein Lagerzapfen (14) vorgesehen ist und deren Basis eine nach innen gerichtete Abkantung (16) aufweist zur Aufnahme der Montagepunkte (13).

4. Fahrbarer Montagebock nach Anspruch 2 oder 3, dadurch gekennzeichnet, dass die Basis der Schwinge (5) bzw. das untere Auflageteil (16) bezüglich ihrer seitlichen Ausdehnung asymmetrisch zur Spitze bzw. zum Drehpunkt (14, 15) liegt und dass beim Kippen das kürzere Ende (B) den unteren bodennächsten Punkt durchläuft.

5. Fahrbarer Montagebock nach einem oder mehreren der Ansprüche 1 bis 4, dadurch gekennzeichnet, dass die Schwinge als Schweisskonstruktion ausgebildet ist, wobei an zwei starkwandigen, etwa dreieckig geformten, die Seitenflächen bildenden Blechen an der Spitze jeweils ein Lagerzapfen (14) angebracht ist und die beiden Seitenflächen bzw. -bleche an der Basis mit einer Traverse (17) verbunden sind.

6. Fahrbarer Montagebock nach einem oder mehreren der vorhergehenden Ansprüche, dadurch gekennzeichnet, dass die Stützen (10) eine Lagerbuchse (15) mit Gleitlager zur Aufnahme der Schwinge (5) bzw. deren Lagerzapfen (14) aufweisen.

7. Fahrbarer Montagebock nach einem oder mehreren der vorhergehenden Ansprüche, dadurch gekennzeichnet, dass an einer der Seitenflächen der Schwinge (5) stützenseitig eine gebogene Zahnstange (18) angebracht ist, auf die das am Fahrgestell (11) befindliche Schneckengetriebe (12) über ein Zahnrad einwirkt.

**Claims**

1. Mobile assembly rig for larger structural units, e.g. vehicle cabs, with a chassis (11) of flat of frame-type construction carrying two opposed struts (10), wherein the struts (10) carry a rotatably mounted assembly rocker (5) whose lower supporting portion (16) is located below the rocker pivot point (14, 15) and which is acted upon by a self-locking worm gear unit (12) or the like, characterised in that the chassis (11) is designed so that the lower supporting portion (16) of the rocker (5) is rotatable and lockable by its assembly points (13) as close as possible to the ground, and the position of the rocker pivot point (14, 15) is offset from the centre line of the lateral ends of the lower supporting portion (16) or of the structural unit to be assembled thereon, by an amount (A) e.g. 150 mm, to obtain correspondingly higher positioning of the structural unit in the tilted position.

2. Mobile assembly rig according to claim 1, characterised in that the rocker (5) essentially consists of two opposed, approximately triangularly shaped side surfaces whose apex in each case comprises a swivel portion (14) and whose base as the lower supporting portion (16) in each case includes at least one assembly clamping point (13a) and an additional supporting point (13b) for the structural unit to be assembled.

3. Mobile assembly rig according to claim 2, characterised in that the rocker (5) comprises two triangular panels at whose apex in each case is provided a bearing journal (14) and whose base comprises an inwardly directed bent edge (16) for receiving the assembly points (13).

4. Mobile assembly rig according to claim 2 or 3, characterised in that the base of the rocker (5) or the lower supporting portion (16) with respect to its lateral extension is located asymmetrically to the apex or to the pivot point (14, 15), and during tilting the shorter end (B) passes through the lower point closest to the ground.

5. Mobile assembly rig according to one or more of claims 1 to 4, characterised in that the rocker is constructed as a welded construction, wherein a bearing journal (14) is mounted at the apex of each of two thick-walled, approximately triangularly shaped panels forming the side surfaces, and the two side surfaces or panels are connected to a crossbar (17) at the base.

6. Mobile assembly rig according to one or more of the preceding claims, characterised in that the struts (10) comprise a bearing bush (15) with plain bearing for receiving the rocker (5) or the bearing journal (14) thereof.

7. Mobile assembly rig according to one or more of the preceding claims, characterised in that on one of the side surfaces of the rocker (5), on the strut side, is mounted a curved rack (18) which is acted upon by the worm gear unit (12) located on the chassis (11), via a gear.

**Revendications**

1. Chevalet de montage mobile pour grandes unités modulaires, par exemple des cabines de véhicules, comportant un chariot (11) portant deux montants (10) opposés, les montants (10) supportant une coulisse de montage (5) montée de façon à pouvoir tourner, dont la partie d'appui inférieure (16) se trouve au-dessous du centre de rotation (14, 15) de la coulisse et sur laquelle agit un engrenage à vis sans fin autobloquant (12) ou analogue, caractérisé en ce que le chariot (11) est conformé de telle façon que la partie d'appui inférieure (16) de la coulisse (5) peut tourner et être bloquée, avec ses points de montage (13), aussi près que possible du sol, et en ce que la position du centre de rotation (14, 15) de la coulisse est décalé par rapport à l'axe central des extrémités latérales de la partie d'appui inférieure (16) ou de l'unité modulaire devant être montée sur elle d'une distance (A), par exemple 150 mm, pour obtenir un positionnement corrélativement plus haut de l'unité modulaire dans la position de basculement.

2. Chevalet de montage mobile suivant la revendication 1, caractérisé en ce que la coulisse (5) comprend essentiellement deux surfaces latérales opposées de forme sensiblement triangulaire dont le sommet de chacune comporte un élément de rotation (14) et dont la base de chacune reçoit, comme partie d'appui inférieure (16), au moins un point de blocage de montage (13a) et un autre point d'appui (13b) pour l'unité modulaire à monter.

3. Chevalet de montage mobile suivant la revendication 2, caractérisé en ce que la coulisse (5) comporte deux plaques métalliques triangulaires au sommet de chacune desquelles est prévu un tourillon respectif (14) et dont la base comporte un bord replié (16) dirigé vers l'intérieur pour la réception des points de montage (13).

4. Chevalet de montage mobile suivant la revendication 2 ou 3, caractérisé en ce que la base de la coulisse (5) ou la partie d'appui inférieure (16) est, en ce qui concerne son étendue latérale, dissymétrique par rapport au sommet ou au centre de rotation (14, 15), et en ce que, lors du basculement, l'extrémité (B) la plus courte passe par le point inférieur le plus proche du sol.

5. Chevalet de montage mobile suivant une ou plusieurs des revendications 1 à 4, caractérisé en ce que la coulisse est réalisée sous la forme d'une construction soudée, un tourillon respectif (14) étant placé sur chacune de deux plaques métalliques à paroi épaisse de forme sensiblement triangulaire constituant les surfaces latérales, au sommet, et les deux surfaces ou plaques métalliques latérales étant reliées à la base par une traverse (17).

6. Chevalet de montage mobile suivant une ou plusieurs des revendications précédentes, caractérisé en ce que les montants (10) comportent un coussinet (15) à palier lisse pour recevoir la coulisse (5) ou son tourillon (14).

7. Chevalet de montage mobile suivant une ou plusieurs des revendications précédentes, caractérisé en ce qu'une crémaillère arquée (18) est placée sur l'une des surfaces latérales de la coulisse (5) du côté du montant, sur laquelle crémaillère agit, par l'intermédiaire d'un pignon, l'engrenage à vis sans fin (12) se trouvant sur le chariot (11).

FIG. 1

FIG. 2

FIG.3

KIPPRICHTUNG

FIG. 4

(a)

(b)

(c)